# EUROPEAN PATENT APPLICATION

(11) **EP 1 355 503 A1**
(43) Date of publication of application: **22.10.2003**
(21) Application number: 02405306.8
(22) Date of filing: 15.04.2002
(51) Int. Cl.: H04Q 7/32

(54) **A digital mobile communication system**

(71) Applicant: TDC Switzerland AG, 8050 Zürich (CH)
(72) Inventor: Widmer, Stephan, 8003 Zürich (CH); Chaher, Mustapha, 8304 Wallisellen (CH); Brückner, Andreas, 8610 Uster (CH); Wendler, Ingo, 5504 Othmarsingen (CH)
(74) Representative: Clerc, Natalia

(57) **Abstract**

A digital mobile communication system comprises a home location register HLR, wherein in the home location register HLR sets of different identity numbers IMSI and different customer's subscriber numbers MSISDN are recorded. In the system several sets are combined to an identical subscription and to an identical external phone number for different mobile communication devices (1, 2, 3). The HLR considers only one of these devices (1, 2, 3) of the same subscription as being active and the other as being inactive at least for incoming calls. Each set consists of one single and unique identity number IMSI and one single and unique customer's subscriber number MSISDN. One customer's subscriber number MSISDN of a subscription is defined as main customer's subscriber number MSISDN and this main customer's subscriber number MSISDN is always part of the set of the active communication device (1, 2, 3).

## Description

### Field of the invention

The invention relates to a digital mobile communication system and a method for operating a digital mobile communication network in accordance with the preamble of claim 1 and claim 6 respectively.

### Description of the related art

More and more subscribers of mobile communication systems have several mobile devices for different purposes, for example a car phone, a Personal Digital Agenda (PDA) with phone capabilities and a normal mobile phone.

Normally, each device has its own subscribers identity module (SIM) card, also called smart card. In each SIM card, a different identity number IMSI (International Mobile Subscriber Identity) is stored, having its counterpart in a Home Location Register (HLR) of the mobile network operator. In this home location register HLR, the identity numbers IMSI is related to a customer's subscriber number MSISDN (Mobile Subscriber ISDN), identifying the phone number.

In the earlier mobile communication systems, the subscriber's phone number was always linked to the mobile device itself, so that a customer possessing several devices also had two different phone numbers and two different GSM (Global System for Mobile Communication) subscriptions. This solution has the inconvenience, that the GSM network operator has to issue several bills, one for each subscription number, and it was not possible to provide the subscriber with only one single bill for all the services received from the same operator. Furthermore, the subscriber and also the people wanting to contact him have to handle and keep in mind different phone numbers. For these and also other reasons, it would be more practical, if a subscriber can use different mobile devices within the same subscription. If would furthermore be practical, if all these devices can be contacted by use of one single common phone number.

In the prior art, several solutions are suggested to solve this problem. All these solutions have in common, that only one of the devices is active, the others are inactive and that the subscriber can change to an inactive device, which than will be acknowledged as active by the GSM network operator. However, these solutions suggested have some drawbacks.

EP-A-0'672'328 discloses a digital mobile telephone system in which each subscriber is assigned a telephone number and several SIM cards with different identity numbers IMSI. In the home location register HLR, the identity numbers IMSI of the subscriber's cards are stored in one record each. Only one of the records also contains a customer's subscriber number MSISDN. Therefore, only the one of the SIM cards associated with this MSISDN number is active and can be addressed by an incoming call. When the customer uses an inactive device, the HLR register is updated and this device is activated, wherein the former active device is deactivated. This happens either by shifting, in the HLR, the identity number IMSI of the currently activated SIM from the record with the MSISDN to another record without this MISISDN or by shifting the MSISDN to the other record with the second identity number IMSI to be activated. In another embodiment, all identity numbers IMSI are stored in the same record, wherein only one is linked to the subscriber's number MSISDN. The drawback of this solution is, that the HLR has to be amended to accept this kind of records.

WO 98/24257 discloses a system with several SIM cards with different IMSI, but identical MSISDN numbers. Here too, the information concerning the association of the subscriber with the different IMSI numbers is stored in the HLR. This system requires therefore an amendment in the HLR.

EP-A-0'669'774 shows a system with several SIM cards having identical IMSI numbers. The MSISDN numbers are identical too. These cloned SIM cards are open for fraud. The subscriber can never be sure, if all clones are really in his possession or if there does not exist another one used by a third party but billed on his account.

A further disadvantage of most of the known systems in use on the market is, that the subscriber has no control over his devices. The devices are activated automatically. The last used device is the active one, the others are deactivated automatically. This means for example, when the subscriber looses a device, he has to cancel his whole subscription and buy new SIM cards, since otherwise another person may be able to activate the lost device and use it too. Furthermore, small children or even pets can activate his home device without him realizing it, so that he still considers to be contactable by his mobile phone he is carrying with him.

WO 94/28686 describes a mobile radiotelephone system called Duo Card. In the HLR, two sets of IMSI and MSISDN numbers are associated with each other, wherein one of them is defined as being active and the other as inactive. To change the inactive device into an active one, the subscriber sends an activating message to the HLR, which then uses the other set of IMSI and MSISDN numbers. The first set is flagged as inactive, the new one as active. This system too requires an amendment of the home location register HLR. Furthermore, the number of different devices which can be used with the same external phone number are limited to be two.

### Summary of the invention

It is therefore an object of the invention to overcome the above mentioned disadvantages.

This object is achieved by a digital mobile communication system and a method for operating a digital mobile communication network with the features of claim 1 and claim 6 respectively.

In accordance with the present invention, for each device used by the subscriber in the same subscription, a set of unique identity numbers IMSI and unique customer's subscriber numbers MSISDN are stored in a register. One or one group of these customer's subscriber numbers MSISDN is defined as main group or number, which is always related to the active identity number IMSI. Therefore, the identity numbers IMSI are shifted relative to the main customer's subscriber number MSISDN, when the subscriber sends an activating code for a currently inactive device.

The home location register has still the known architecture, where each IMSI has its own MSISDN or its own group of MSISDN. However, only the MSISDN's of the active IMSI and therefore only one set of numbers within the same subscription is active for incoming calls.

Only one single calling line identity is shown outside to the customer and the called party. Therefore, the subscriber and also third parties never receive any information about the other existing MSISDN numbers. The subscriber has not to suppress this information actively, when he changes between the different devices. Otherwise, a person he is calling may be confused when seeing on his display an unknown phone number.

If a device is lost or was stolen, the subscriber can notify the network operator and the original or the momentary set of IMSI and MSISDN number related to this device is cancelled from the register. The system is more flexible, since the relationship between the different set of numbers, it means the common subscription, does not have to be stored in the HLR but can be stored in a separate register, i.e. an unstructured supplementary service data center called USSD Center. The number of combinations is therefore not limited by the home location register. It is especially possible to associate more than two devices with each other. Relationships between five and more devices are possible.

Furthermore, the subscriber is in control of all his devices all the time, since he can activate and deactivate them by sending a special command.

Since the active main MSISDN is always kept active, only the identity numbers IMSI must be swapped. The supplementary services, such as information sent to the subscribers about incoming calls and call forwarding services, can remain attached to this main MSISDN. This reduces the commands needed for swapping, rendering the system to be faster and minimizing the dead time, where no device is active.

Other preferred variants of the method and preferred embodiments of the system are mentioned in the dependent claims.

### Brief description of the drawings

In the following, a preferred embodiment of the invention is explained with reference to the drawings. The drawings show
- figure 1: a general schematic view of a digital mobile communication system in accordance with the invention;
- figure 2: a diagram describing a signal flow and
- figure 3a: an excerpt of the home location register HLR before changing the active device and
- figure 3b: an excerpt of the home location register HLR after changing the active device.

### Description of the preferred embodiments

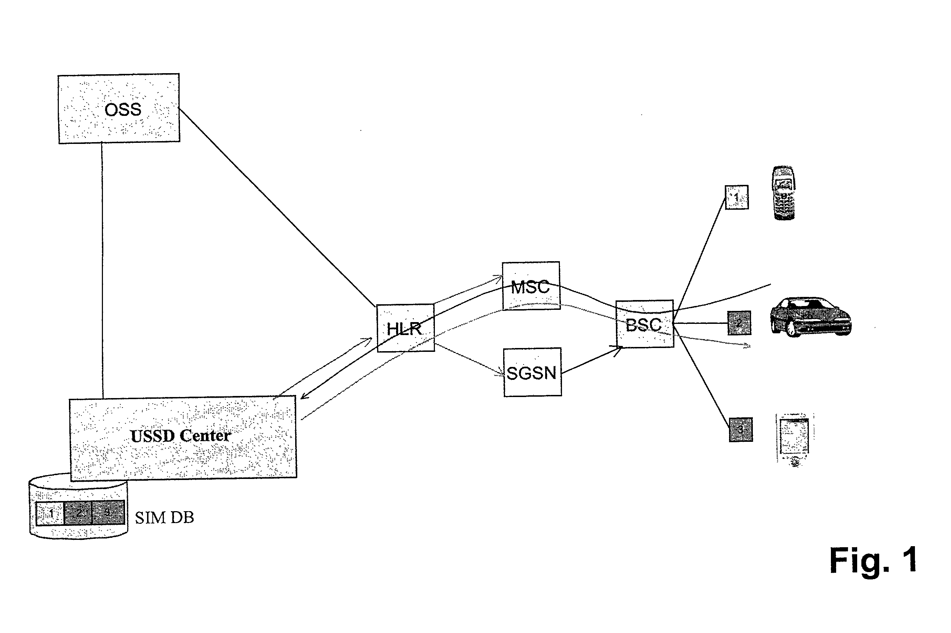

Figure 1 shows a schematic view of a digital mobile communication system, generally known as GSM. This system is based, as mentioned in the introductory part of this application, on subscriber's cards in the form of SIM cards, also called smart cards, and on digital wireless signal transmission between mobile communication devices 1, 2, 3 and Base Transceiver Stations BTS, not shown in the figures. These BTS are connected to a Base Station Controller BSC, which is connected to a Mobile Services Switching Center MSC. This MSC is adapted to control the traffic within a GSM network and between this network and other networks connected thereto. To this switching center MSC, a Home Location Register HLR is connected, which contains information on the system's own subscribers. The HLR typically stores information related to the security functions of the GSM network. Furthermore, the MSC can be connected to a Visitor Location Register VLR, which contains information on visitors found in the coverage area of the connected BTS. The information exchange between MSC, VLR and the own HLR of the visitor is known in the state of the art and is not described herein.

For providing packet functions, the BSC is connected to an SGSN, the SGSN itself is connected to the HLR and VLR. The information exchange between them is known in the stat of the art and not described herein.

An Unstructured Supplementary Service Data Center, further on called USSD Center, is connected to the home location register HLR.

Also connected to the HLR is an Operation Subsystem OSS. This system is responsible for the billing and the provisioning of the subscribers in the automatic way.

The mobile devices shown in figure 1 are a mobile phone 1, a car phone 2 and a Personal Digital Agenda 3, for example a palm pilot. Other kind of devices are possible. Furthermore, it is possible to have two or more devices of the same kind. Additionally, the number of different devices which can be used in this system with the same subscription and the same external phone number is not limited to three. Five and more devices can be connected.

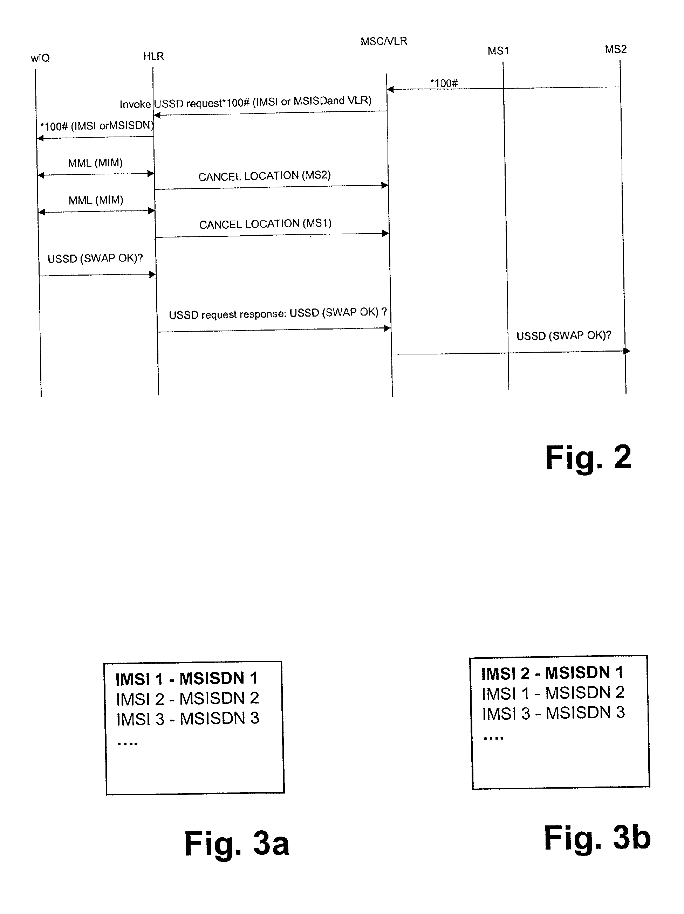

Each device has an internal SIM card with a different and unique identity number IMSI. In the home location register HLR, this IMSI is associated with an MSISDN number. As shown in figure 3a, the mobile phone 1 has as a basic set of numbers IMSI1 and MSISDN1, the car phone 2 has as a basic set IMSI2 and MSISDN2 and the agenda 3 has the basic set IMSI3 and MSISDN3. One MSISDN number is the main number. In this example it is the MSISDN1. Normally, the main number is defined as the first number being registered in the HLR or as the first number being active. This main MSISDN number is related directly to the external known phone number.

In another embodiment, at least one of the IMSI or all IMSI's have more than one MSISDN. In this case, the whole group corresponding to the same IMSI is defined as main group and each member of the set will contain one IMSI and a group of corresponding unique MSISDN's.

These basic sets of numbers are also stored in the USSD Center. All sets of numbers belonging to the same subscription, here called Multiple Card or MultiCard, are connected with each other in this database. If the subscriber wishes to cancel one set or to add a new one, the database entry is changed accordingly and is propagated to the HLR. No other changes have to be made.

As long as the subscriber uses his first device 1, which is related to the main MSISDN, this one remains active and the other devices 2, 3 are inactive. Incoming calls Short Messages SMS are therefore directed via the HLR to the first device 1. However, the mailbox remains for all SIM cards the same and it is possible to use the other, currently inactive devices 2, 3 for outgoing fax and for outgoing data calls, even simoultaneously to voice calls on the active device 1. For example it is possible to surf in the internet or to check the emails.

If the subscriber wishes to change to another device 2 or 3, he sends a request in the form of a USSD service number like *100# from the inactive device which he wants to activate. This is shown in figure 2. The MSC/VLR forwards this request via the HLR to the USSD Center for treatment.

The USSD Center gets the MSISDN of the SIM card of the inactive device, which made the request. The Multiple Card application in the USSD Center is invoked and retrieves the subscriber's SIM's data based on this MSISDN. MML (Man Machine Language) commands defined for this application are sent to the HLR, causing there to swap between the latest active IMSI, here IMSI 1, and the newly sent IMSI, here IMSI 2. This swap is shown in figure 3b. With this swap, the currently active device 1 is deactivated and the device 2 is activated. This swap can happen between all the different devices 1, 2, 3. No order has to be followed. The newly actived device will always keep his own IMSI number and receive the main MSISDN number, the MSISDN1, as related phone number. The deactivated device will keep his own IMSI number and will receive the MSISDN number of the formerly active device.

After the HLR has performed the IMSI's swapping, a CANCEL message is sent to the VLR, therefore causing for both cards, that all location information in the VLR is deleted. The VLR and the network only see the new set of IMSI2 and MSISDN1 as active participant on the network. The Multi Card application sends a feedback message to the newly activated device 2 to show the success of the request. If the application was not able to swap the numbers, it sends a message to the still not activated device 2, that the request was rejected.

If the subscriber wishes to be informed about the status of a device 1, 2, 3, he can send an inquiry to the USSD Center by sending a USSDservice number, for example *101#. In addition, it is also possible to activate a device through another device, by using a special service number and entering an identification for the device to be activated, for example by sending *100*n# to the USSD Center. n is the card number of the device to be activated. To avoid fraud, each subscriber preferably has his own service number and the USSD Center includes a database with the different service numbers of the subscribers.

The invention enables a secure and flexible system, which can combine different mobile communication devices in the same subscription.

## Claims

1. A digital mobile communication system comprising a home location register HLR, wherein in the home location register HLR sets of different identity numbers IMSI and different customer's subscriber numbers MSISDN are recorded, wherein in the system several sets are combined to an identical subscription and to an identical external phone number for different mobile communication devices (1, 2, 3) and wherein the HLR considers only one of these devices (1, 2, 3) of the same subscription as being active and the other as being inactive at least for incoming calls, **characterized in**
**that** each set consists of one single and unique identity number IMSI and a group of at least one unique customer's subscriber number MSISDN,
**that** one group of these groups of customer's subscriber numbers MSISDN of a subscription is defined as main group of customer's subscriber numbers MSISDN and that this main group of customer's subscriber numbers MSISDN is always part of the set of the active communication device (1, 2, 3).

2. A system according to claim 1, wherein the system further comprises an unstructured supplementary service data center USSD Center connected to the home location register HLR, wherein the USSD Center comprises a database, in which database the combination of the sets of identity numbers IMSI and groups of customer's subscriber numbers MSISDN of each common subscription are recorded, and wherein the USSD Center is in communicating connection with the home location register HLR in order to combine the main group of customer's subscriber numbers MSISDN to a newly activated identity number IMSI.

3. A system according to claim 1 or claim 2, wherein more than two, preferably five, communication devices with different identity numbers IMSI can be combined under the same subscription.

4. A system according to one of claims 1 to 3, wherein the system is usable for the inactive communication devices (1, 2, 3) for outgoing fax and/or data calls.

5. A method for operating a digital mobile communication network, wherein in a home location register HLR sets consisting of different identity numbers IMSI and of groups of different customer's subscriber numbers MSISDN are recorded, wherein in the system several sets can be combined to an identical subscription and to an identical external phone number for different mobile communication devices (1, 2, 3) of the same subscription and wherein the home location register HLR switches between an active communication device of these devices (1, 2, 3) combined in the same subscription and an inactive one in order to render this inactive one to become the active one and the actual active one to become the inactive one at least for incoming calls, **characterized in**
**that** for each communication device (1, 2, 3) a unique identity number IMSI and a group of at least one unique customer's subscriber number MSISDN are combined with each other, **that** one group of these groups of customer's subscriber numbers MSISDN of a subscription is defined as main group of customer's subscriber numbers MSISDN and
**that** in order to activate one of the communication devices (1, 2, 3) its identity numbers IMSI is combined with this main group of customer's subscriber numbers MSISDN.

6. A method according to claim 5, wherein an unstructured supplementary service data center USSD Center manages the combined set of identity numbers IMSI and a group of customer's subscription numbers MSISDN of the same subscription in a database and sends the home location register HLR commands in order to switch the numbers within at least two sets in order to change the active device.

7. A method according to one of claim 5 or 6, wherein the identity number IMSI of the newly to be actuated device is written into the set of the main group of customer's subscription numbers MSISDN and the identity number of the former active device is deleted in the set of the main group of customer's subscription numbers MSISDN.

8. A method according to claim 7, wherein the identity numbers IMSI are swapped.

9. A method according to one of claims 5 to 8, wherein one of the inactive devices is only actuated when a message, preferably a service number, was sent, wherein the message was sent by this device or another device of the same subscription.
